# EUROPEAN PATENT APPLICATION

(11) **EP 1 498 308 A1**
(43) Date of publication of application: **19.01.2005**
(21) Application number: 03254449.6
(22) Date of filing: 15.07.2003
(51) Int. Cl.: B60P 1/02, B60P 1/54

(54) **Goods handling system**

(71) Applicant: S.Cartwright & Sons (Coachbuilders) Limited, Altringham, Cheshire WF14 5DH (GB)
(72) Inventor: Adams, William Mark, Redford, DN22 8PT (GB)
(74) Representative: Quest, Barry

(57) **Abstract**

The invention relates to an improved goods storage system in a member of embodiments for a goods storage area in the form of a vehicle or railway trailer (2). The improvements allow the goods supporting base (40) to extend beyond externally of the goods storage area and allow the transportation of the goods to a from an external surface. In addition or alternatively, if the floor of the storage area has a number of different levels the base can be provided to be raised and lowered to the adjacent each of the different levels.

## Description

The invention to which this invention relates is a system and apparatus for the handling of goods within a confined area such as for example the area of a vehicle or railway trailer. The area of the trailer is typically defined by side walls, one or both of which may be openable or "curtain sided" or solid roof and floor with typically a sealed end wall and an opposing end wall which is selectively openable by opening doors which define the end wall.

The trailers with the goods storage area defined therein are provided for the storage and transport of a wide variety of goods such as for example furniture, tyres, packages for delivery, foam, garments and the like.

The applicant's granted patent describes one form of goods handling system which allows a goods supporting base upon which goods and/or a person or persons can be supported. The base is provided to be movable in a vertical direction along the first set of guide means and also along substantially the length of the trailer along a second set of guide means. This system has been of significant commercial success but one problem which has been identified is that the goods support system cannot be used at present to extend beyond the open end of the trailer so as to allow the movement of goods on the base from the trailer to an external surface, via the system.

There are principally two problems experienced by goods handling or logistics companies and these are as follows. The first problem is to ensure that the goods are stored within the goods storage area in as efficient a manner as possible so as to maximise the usage of the available storage space. By maximising the use of the storage space then the transport of said goods storage area from location A to location B becomes more economical. Thus the use of storage space can make the difference between a company being profitable or not in the handling and transport of goods.

The second problem faced is with regard to the health and safety of the drivers and/or goods handlers in placing and removing the goods from the storage area. Conventionally, the goods will be placed into the goods storage area or retrieved from the same by a person manually climbing over other goods to reach the required storage area location. As storage space can be relatively high, it will readily be appreciated that there is a risk of injury to the person themselves and in addition, there is a substantial risk of damage to the goods within the storage area.

A further problem which is experienced is that not all floors of goods storage areas are at a constant level. In many cases, the front of the goods storage area, that part which is located near the vehicle pulling the same, is stepped up and in some instances, the rear of the goods storage area can include a step down. With the drive mechanism described in the Applicant's granted patents, it is difficult for these different floor level portions of the goods storage area to be serviced correctly as the vehicle guide means limit and define the extent of movement of the base to a particular level of the storage area floor and does not allow the base to be moved to the other floor levels as the guide means contacts the same.

The aim of the present invention is to provide a goods handling system of a form to allow the goods storage system to extend beyond the opening of the trailer and allow the loading and unloading of goods to and from external surfaces, and also to allow the level of access to all areas of the trailer to be improved.

In a first aspect of the invention there is provided a goods handling system for a transportable goods storage area, said handling system comprising a set of guide means mounted on or adjacent to the side walls and/or roof of the goods storage area, along at least a portion of the length of the storage area, support means in connection with said set of guide means lying in a substantially vertical plane, said support means mounted for movement along the set of guide means and supporting a goods supporting base, said base movable in horizontal and vertical directions within at least the said portion of the goods storage area and wherein at least one of said set of guide means or support means are selectively positionable to allow the goods supporting base to extend beyond an open wall or end of the goods storage area to a location externally of the goods storage area and for movement in at least a substantially vertical plane.

In one embodiment, at one end of each or some of the set of guide means there are stored extension members which, when the doors defining the openable end wall are opened, are moved to form an extension of the set of guide means, and extend beyond the open end of the storage area.

In one embodiment the extension members are stored in position on the doors themselves such that when the doors are opened, and supported in a predetermined location, the extension members form a continuation of the guide means.

In an alternative embodiment at least some of the guide means are telescopically extendable so as to extend beyond the open end of the storage area.

With the guide means in the extended position, the support means and base can be moved along the same to a position externally of the goods storage area of the trailer and, furthermore, the support means are extendable to a sufficient length to allow the base to be brought to a location on or adjacent an external surface, which can be lower than the floor of the goods storage area. This in turn allows improved loading and unloading of goods to and from the trailer as goods can be loaded onto the base at or adjacent to the level of the external surface and then raised to at least the level of the floor of the goods storage area without the need of a person or persons to carry or lift said goods to that position. The same advantages can be obtained in reverse when unloading goods from the goods storage area onto the external surface.

In one embodiment, the support means for the apparatus comprises a frame including a series of rollers or other engagement means which are formed to engage with the set of guide means. Depending downwardly from the frame are a series of columns or other members by which the base is carried.

In one embodiment, the columns or elements located within the same, and engaging with the base, are telescopic so as to allow the movement of the base in the vertical direction as required.

In one embodiment, the movement of the base via the support means is via a hydraulic mechanism and the various parts and fittings for the hydraulic system can be mounted within the area defined by the frame with hydraulic rams mounted within, or forming, the support columns. It is envisaged that the frame can be provided of a width and length to suit particular goods storage area requirements and it is preferred that the width of the frame be such to allow the frame to extend substantially across the width of the goods storage area and hence the base to also extend substantially across the width of the goods storage area.

In one embodiment, the set of guide means comprise two tracks, one mounted on each of the side walls of the goods storage area and typically, towards the top of said side walls adjacent the roof of the goods storage area. Typically, the tracks include locations to allow the support means to be locked at selected positions along said tracks. In addition, it is envisaged that electrical connections can be provided as integral parts of the tracks or adjacent thereto and, if required, mechanical rack and pinion or other drive means formations can be provided to allow the mechanical driving of the base and support means along said set of guide means. Alternatively, the support means and base may simply be pushed along the set of guide means by a person or persons.

In a further embodiment the set of guide means comprise three or four or more guide means mounted on or adjacent to the side walls of the storage area at spaced intervals. In one embodiment on each solid side wall, a first guide means is mounted at or adjacent the top of the side wall and another is mounted at a lower location on the side wall. On a side wall which has an opening or is curtain sided, one guide means is provided at a location close to the top of the side wall, thereby leaving the opening clear for use.

To aid the movement of the base in a substantially vertical plane, additional rollers or guides can be provided so as to prevent or minimise the risk of the vertical movement of the base jamming. To further prevent and/or minimise jamming the support means may include side walls positioned between the support columns which side walls are also telescopic and extend or retract in accordance with movement of the base in the vertical direction. In one embodiment if hydraulic rams are used to form the support means columns, additional rollers and/or telescopic side walls are not required.
In a second aspect of the invention there is provided a goods storage system for a goods storage area defined by a floor, side walls and a roof, said system including a base for the selective placement of goods thereon, said base movable in a vertical direction within the goods storage area and a horizontal direction within the goods storage area, said base located on a plurality of members, depending upwardly from said base, said members contactable with at least a first set of guide means to allow movement along the guide means in a vertical direction and characterised in that movement of the base in the vertical direction is achieved by the selective operation of at least one set of powered movement means said movement means arranged such that a first movement means extends upwardly and a second movement means extends downwardly.

In one embodiment the first and second movement means are hydraulic rams.

Typically the bodies of the respective hydraulic rams in a set are mounted side by side. Typically each set of hydraulic rams are mounted adjacent a side wall of the goods storage area.

Typically, when moving towards the floor of the goods storage area, the movement of the hydraulic rams to the greatest extended position, allows the base, in turn, to be adjacent to a portion of the floor. Typically the length of the members supporting the base are such as to be of sufficient length to traverse the distance from the low point of the base on to the guide means lower levels of the floor by extension of the members downwardly beyond the lowest point of the guide means. Furthermore, the length of the members are preferably such so as to ensure that the base can be moved to the lowest point of the floor and hence allow the base position to take into account changes in the height of portions of the floor of the goods storage area. This therefore allows the base to be always provided adjacent the floor of the goods storage area even if the floor has different portion levels therealong.

Typically, the vertical set of guide means are mounted on a second set of guide means for horizontal movement therealong with the first and second sets of guide means mounted on or adjacent the side walls of the goods storage area.

Typically, at each side of the apparatus, there is provided a housing, said housing incorporating one set of hydraulic rams.

In a preferred embodiment, the sets of hydraulic rams are linked to be driven by a common hydraulic control system. Typically the set of hydraulic rams are synchronised so as to ensure synchronised movement of the base along the guide means.

In a further embodiment the goods storage system can extend outwardly beyond the goods storage area and the base be moved to a position below the level of the goods storage area floor allowing the same to be used in the same manner as a taillift for a vehicle storage area. In this embodiment multistage or telescopic hydraulic rams can be used.

Typically the guide means comprise a series of tracks, typically four in each set, said tracks, or the articles moving therealong, including rollers to enable the smooth movement of the base in the vertical and horizontal directions. Holes or other locking means can be provided in the tracks so as to allow the base to be locked in a required position with respect to the sets of guide means.

In one embodiment the base can be moved up to the roof of the goods storage area as there are no cross stays or other support members required to be provided in the current invention. Typically when the base is at the rear of the goods storage area adjacent the opening into the same, the base can be used to carry goods thereon during the transport of the goods. This allows the area underneath the base to also be used to carry goods.

In a further aspect of the invention there is provided a goods storage system for a goods storage area, said system comprising a base mounted with respect to a series of members which, in turn, are mounted for movement along a set of vertical guide means wherein said base is movable to a position at the bottom end of said guide means and can then be lowered further by downward movement of the members with respect to the guide means such that the base is lowered to a position below the end of said guide means.

Typically said movement is powered by hydraulic rams.

In a further aspect of the invention there is provided a goods storage system for a goods storage area defined by a floor, side walls and roof, said system including a base for the selective placement of goods thereon, said base movable in vertical and horizontal directions within the goods storage area, wherein said base is located with a plurality of members in a scissor arrangement, said arrangement extending downwardly from, or adjacent to, the roof of the goods storage area, the length of the extension controlled to determine the position of the base in the vertical plane.

In one embodiment, the base is also connected to a plurality of guide members which extend in a telescopic manner in response to the extension of further members connected to the base.

In one embodiment, a scissor arrangement is provide at two opposing sides of the base each adjacent a side wall of the storage area, each of said scissor arrangement is preferably acted upon by drive means which determine the extent of extension of the scissor arrangement.

In one embodiment, the drive means is a hydraulic ram connected to one of said members in the scissor arrangement and acting upon said member to determine the extent of extension of the scissor arrangement.

In one embodiment, the drive and control system for the drive means are mounted on the roof and/or side walls of the goods storage area.

Typically, one drive means in the form of a hydraulic ram is provided for each scissor arrangement such that in a preferred embodiment of the invention, two hydraulic rams are required, one for each of the two scissor arrangements, said hydraulic rams operated in unison.

In a further embodiment of the invention, the goods storage system includes horizontal guide means along which the vertical guide means, if provided, and scissor arrangement and associated drive means can move to allow the positioning of the base in a horizontal plane within the goods storage area.

In one embodiment, the horizontal guide means include an extendable section to allow the same to selectively extend beyond an open end of the goods storage area and thereby allow the base to be moved to a position at or adjacent to an external surface, said external surface being lower than the floor surface of the goods storage area.

In a yet further aspect of the invention there is provided a goods handling system for a goods storage area, said handling system comprising a set of guide means mounted on, or adjacent to the side walls, and/or roof of a goods storage area, said guide means provided along substantially the length of the storage area, a set of support means in connection with said set of guide means lying in a substantially vertical plane, said support means mounted for movement along the set of guide means and supporting a goods supporting base said base movable in horizontal and vertical directions within the confines defined by the goods storage area and characterised in that at least one of set of guide means or support means are selectively positionable to allow the goods supporting base to extend beyond an openable end of the goods storage area to a location external of the goods storage area.

Typically, in whichever embodiment the goods storage area is transportable in a as much that the same is part of a vehicle body such as a van or the like or, alternatively is a trailer which can be attached to a tractor unit to form a vehicle or can be mounted as, for example, a rail wagon. The embodiments now provided describe the use with respect to a road vehicle goods storage area.

Specific embodiments of the invention are now described with reference to the accompanying drawings, wherein:-
Figures 1a and b illustrate a plan and elevation of a goods storage area in the form of a vehicle trailer in accordance with one embodiment of the invention;
Figure 2 illustrates in schematic fashion, the trailer of Figures 1a and b in use in conjunction with a goods support system in accordance with one embodiment of the invention;
Figure 3 illustrates the support means and base in accordance with the invention;
Figure 4 illustrates one of the set of guide means in accordance with the invention;
Figure 5 illustrates an elevation of a further embodiment of the invention;
Figure 6 illustrates a yet further embodiment of the invention.
Figure 7 illustrates a goods storage area with a goods handling system in accordance with another embodiment of the invention with the base shown at various positions therein;
Figures 8A-C illustrate detailed views in different positions, of the goods handling system in accordance with the invention;
Figure 9 illustrates a further embodiment of a goods storage area with the goods storage system in a further position;
Figure 10 illustrates a goods storage area with a goods storage system illustrate in three possible positions with respect to the goods storage area; and
Figures 11A-E illustrate a further embodiment of the invention in use with a transportable goods storage area.

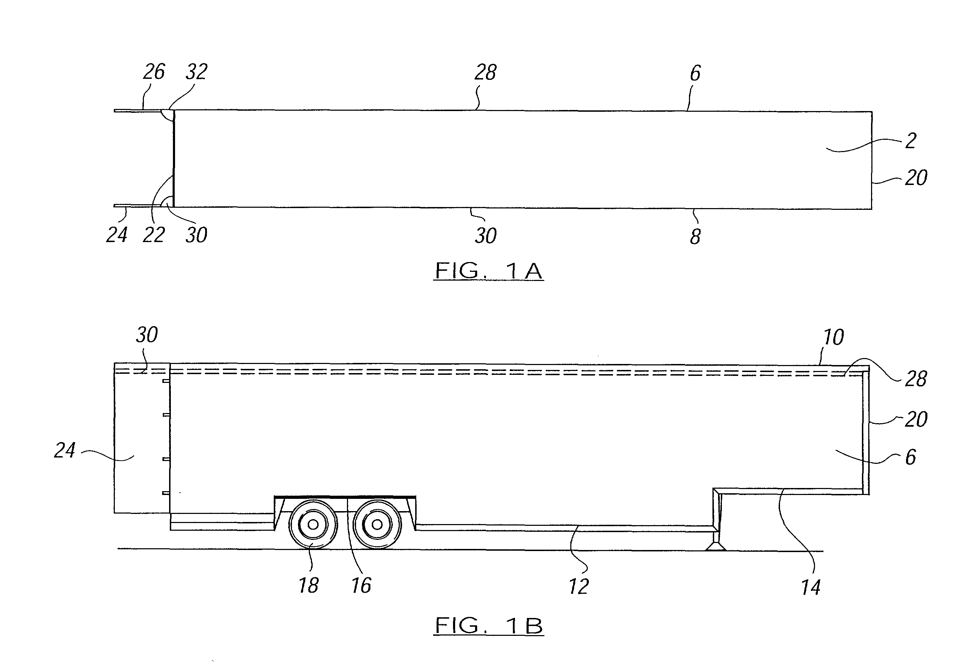

Referring firstly to Figures 1a and b, there is illustrated a goods storage area in the form of a vehicle trailer 2. The goods storage area is defined by side walls 6 and 8, a roof 10 and floor 12, which in this case, is uneven due to the provision of step 14 at which the trailer can be located with the vehicle (not shown) and a further step 16 for location of rear wheels 18 for the trailer. An end wall 20 is provided which is not openable and an opposing end wall 22 is defined by two doors 24, 26 which can be selectively openable to allow the loading and unloading of goods into and from the storage area. Provided within the goods storage area, and as part of the build of the same, are a set of guide means 28, 30 which, in this embodiment, comprise two guide means extending substantially along the length of the goods trailer itself. Also provided are extension members 30, 32 for the set of guide means which are located on the doors and the doors can be provided to be openable to the position shown in Figure 1a, in which position the doors can be locked, so that the extension members form an extension of the first set of guide means beyond the goods storage area which is defined.

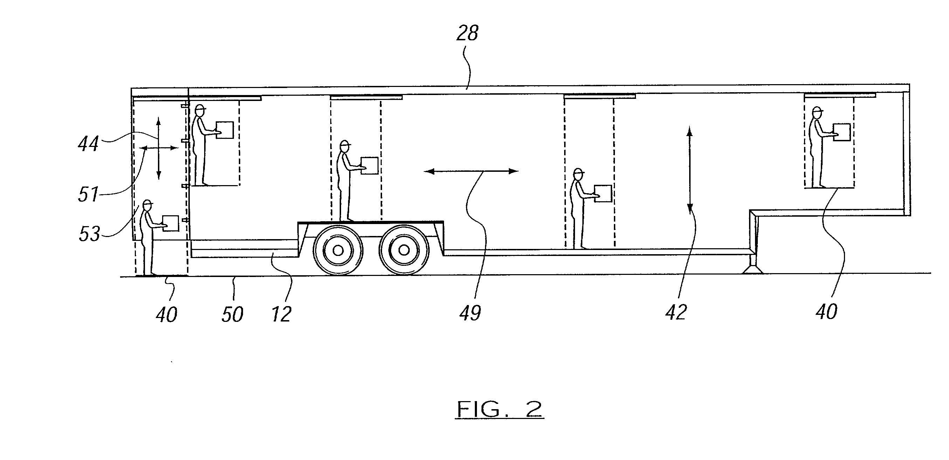

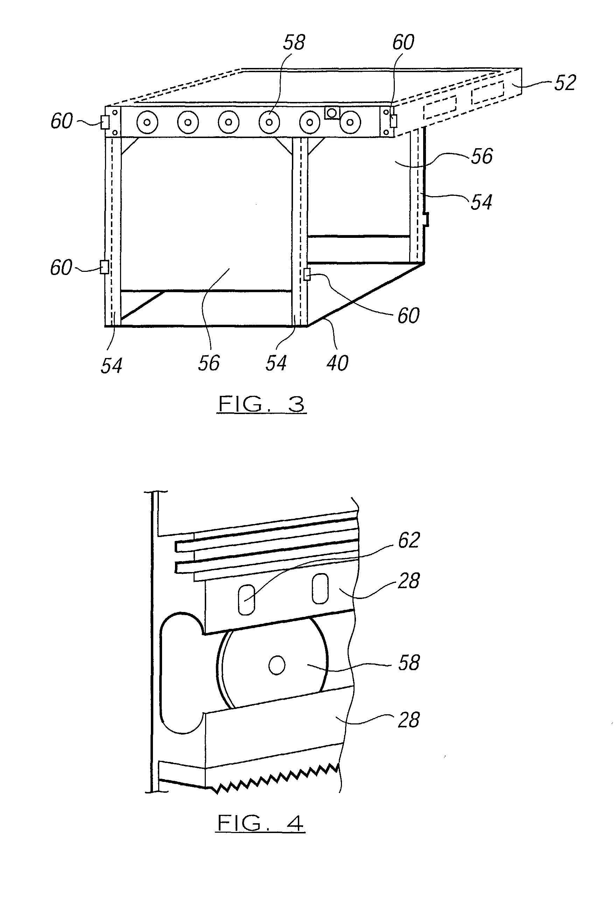

Figure 2 illustrates in schematic fashion the invention in use in one embodiment and shows five different positions of the goods support system which can be selected. It should however be appreciated that these positions shown are not the only positions but are simply provided for illustration purposes. In each case the goods support system comprises a base 40 which is supported at varying heights as indicated by the arrows 42, 44 by support means which are provided in engagement with the set of guide means 28, 30. The support means are shown in greater detail in Figure 3 but can comprise a frame and supporting columns and/or walls which are in contact between the frame and the base.

Thus, it will be appreciated that within the goods storage area, the goods support system can be moved horizontally within the same to any position is indicated by arrows 49, 51 and the base itself can be moved vertically as appropriate to allow a person with goods as shown to unload or load the same at the required convenient height. In the position 53 shown, the goods support system can also be used to allow the loading and unloading of goods from and to an external surface 50. This is achieved by opening the doors as shown, stabilising or locking the doors in position as shown in Figure 1a and thereby bringing into use the extension members to the set of guide means. When the extension members are in position, the frame of the goods support system can then extend onto the set of guide means on the doors such that, preferably, part of the frame is mounted on the extended portion of the set of guide means and part of the frame is mounted on the guide means within the goods storage area. However, the base itself is free to move lower than the floor 12 of the goods storage area as shown so that the base itself is lowered to the level of the external surface as shown. This cannot be achieved with any known conventional goods storage system which can also be used within the goods storage area.

It should be noted that as an alternative to the extension members, other forms of locators are provided for the support means which allow the same to extend beyond the opening.

Figure 3 illustrates the goods support system in more detail and shows the frame 52, base 48 and support columns 54 with support walls 56. The frame includes a series of rollers 58 for location along the set of guide means 28 as shown in Figure 4. A series of hydraulic workings can be mounted within the frame 52 and parts and fittings which allow the powered movement of the base to and from the frame in the vertical direction. The movement of the base can be by hydraulic rams as discussed and said hydraulic ram can be provided within or form the telescopic columns. Telescopic side walls can also be provided to provide a more rigid structure. To further ease the movement of the base with respect to the goods storage area, a series of guides 60 which may be rollers, are provided to prevent the movement of the base from jamming.

Figure 4 illustrates one of the set of guide means, 28 and typically two or more of the same are provided, one on or adjacent each side wall of the goods storage area. A series of locking portions 62, in this case apertures, can be provided along the length of the guide means so as to allow the reception of a locking mechanism, typically comprising a shoot bolt which can be electrically operated. Thus, when the locking mechanism is engaged with an aperture, the horizontal movement of the goods support system is prevented thereby providing a secure and safe base position on which a person can load and unload goods.

If required, electrical connections and/or mechanical drive formations can be provided at or adjacent to the guide means so as to allow, respectively, the electrical power of various elements of the support system and/or mechanical drive of the goods support system along the length of the goods storage area.

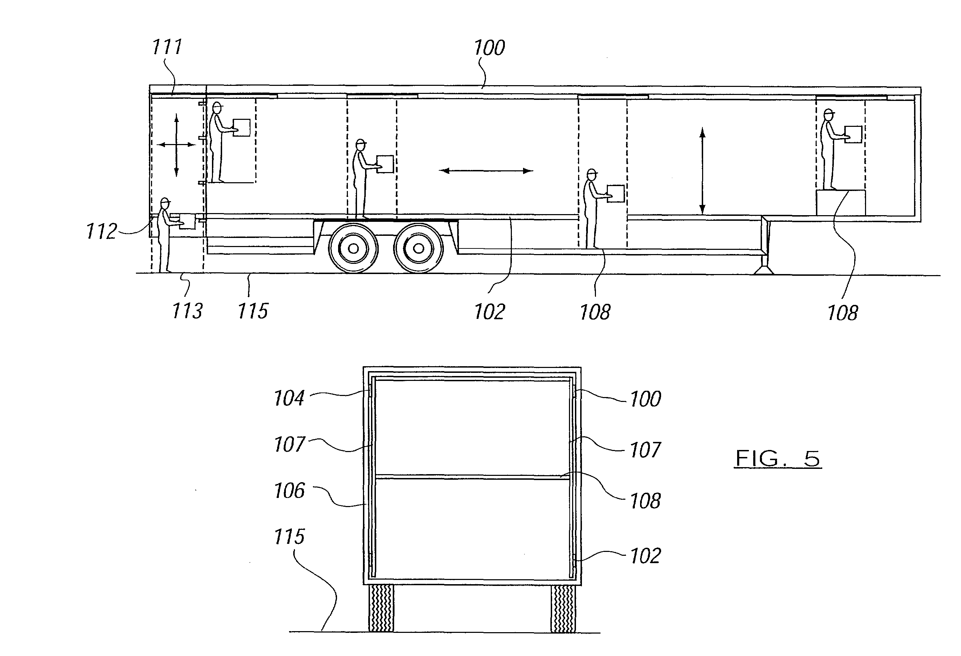

Figure 5 illustrates a further embodiment of the invention in elevation and end view where the set of guide means comprise guide means 100, 102, 104, 106. Two guide means are provided on each of the side walls, and the support columns extend 107 to engage with the guide means, with the base 108, moving along the support columns by appropriate drive means. Once again extension members 111 are provided at the open end for the guide means to allow the base to be moved to a position 113 beyond the open end whereupon the support columns can telescopically or otherwise extend downwardly to allow the base to move to a lower external surface 115.

It should be appreciated that extension members need not always be provided for each of the guide means in a set. Although reference is made herein to extension members, the same can be replaced by, and reference to the same includes, locators, whereupon the support means with base travels along the normal guide means to the end of the same and the leading edge of the same may continue to move without contacting guide means until meeting locators which serve to lock the support means, and hence the base, in a position which allows the base to move to the external surface. The location can be provided on the doors of the goods storage area, depend from the roof or floor of the same or be otherwise fixed to provide the required secure location.

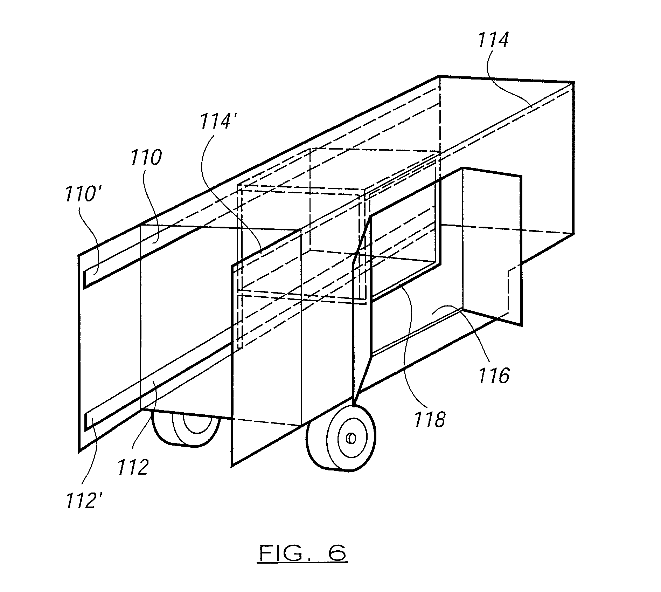

Figure 6 illustrates a further embodiment of goods storage system for use with a goods storage area in this case having an open side or opening 116 in a side wall which is required to be used for access. In this case the set of guide means comprises two spaced guide means 110, 112 and extension members 110', 112' on the solid wall side and a guide means 114 and extension member 114' on the wall with the opening. The guide means 114 is mounted at the top of the side wall thereby allowing unrestricted access to the opening with the base 118 movable upwardly and/or sideways out of the way of the opening as required. The remainder of the apparatus operates as previously described.

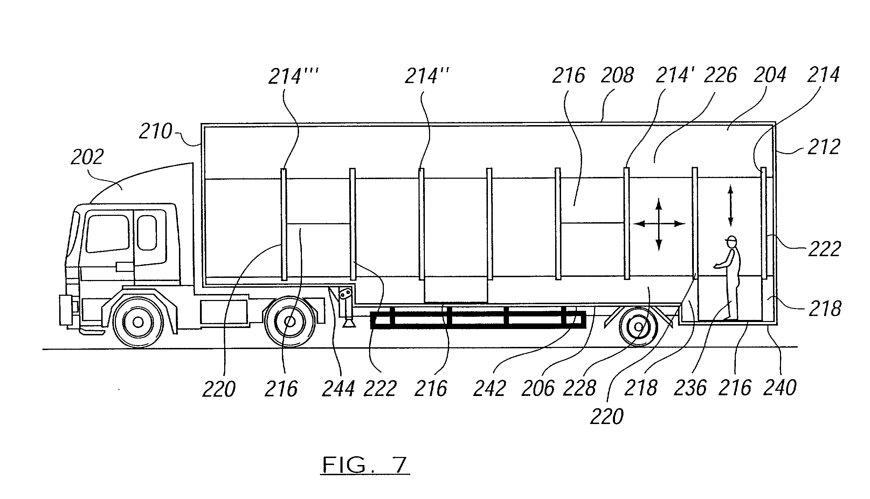

Referring now to Figure 7, a further embodiment of goods handling apparatus is described which can be used exclusively or inclusively with features of the apparatus of Figures 1-6. There is illustrated in elevation, a towing vehicle 202 and a goods storage area 204 in the form of a trailer having a floor 206, roof 208 and side walls, not shown. The front 210 of the goods storage area is closed and the rear 212 is provided with doors to allow access into the goods storage area. For illustrative purposes, there is shown a goods storage system in a schematic fashion 214. The goods storage system is also shown moved to another three other possible positions within the goods storage area and referred to as 214', 214" and 214"', although it should be appreciated that typically only one goods storage system 14 is required to be provided in the goods storage area and in accordance with the invention it can be moved to any position within the gods storage area.

The goods storage system includes a base 216 mounted on members 218 which in turn are mounted for movement on a first set of guide means 220, 222. The first set of guide means are, in turn, mounted for movement along a second set of guide means 226, 228. The first set of guide means allow vertical movement of the base therealong and the second set of guide means allow horizontal movement of the first set of guide means therealong as illustrated by arrows 230, 232 respectively.

In the example shown in Figure 7, no goods are shown on the base but instead a goods handler 236 is shown who can control the movement of the base both vertically and horizontally via drive means controls (not shown). In the position shown for the system 214, the base is shown fully extended to a downward position so as to be adjacent the floor of the goods storage area in the lowest stepped portion 240. To move to the position 214', the person operates the control means to move the base, firstly above a level of the floor 242 and then continues to move the same until they reach the position illustrated in 214'. The operator can then, or may simultaneously, cause the first set of guide means to move along the second set of guide means to reach the position within the goods storage area as shown at 214'.

The person can then move the system to reach the position of 214" by operating the control means to move the first set of guide means along the second set of guide means to reach the position shown at 214" in the goods storage area and then cause the control means to move the base to the floor portion 242.

In turn, the person can then move the system from 214" to the position 214"' and take into account the stepped portion of the floor 244 as shown as the first set of guide means 220, 222 are only of a length so that the same can still pass over the floor portion 244 without causing obstruction, and this is a significant improvement over the conventional systems. The person therefore raises the base to the height, at least of the floor portion 244 but as shown in 214''' to a higher position still and operates the control means to move the first set of guide means along the second set of guide means as shown.

Yet further, for transport, the storage system 14 can be moved to the rear 212 of the storage area and the base moved up to a height to allow a first quantity of goods to be stored therein and a second quantity of goods to be stored under the same during transit. Thus all of avoidable space of the storage area can be utilised.

Typically the base has a completely clear loading area up to the roof (no cross stays). This enables the goods handler to remove the lower goods when he is at ground level, and then to lower the base giving easy access to the goods stored thereon.

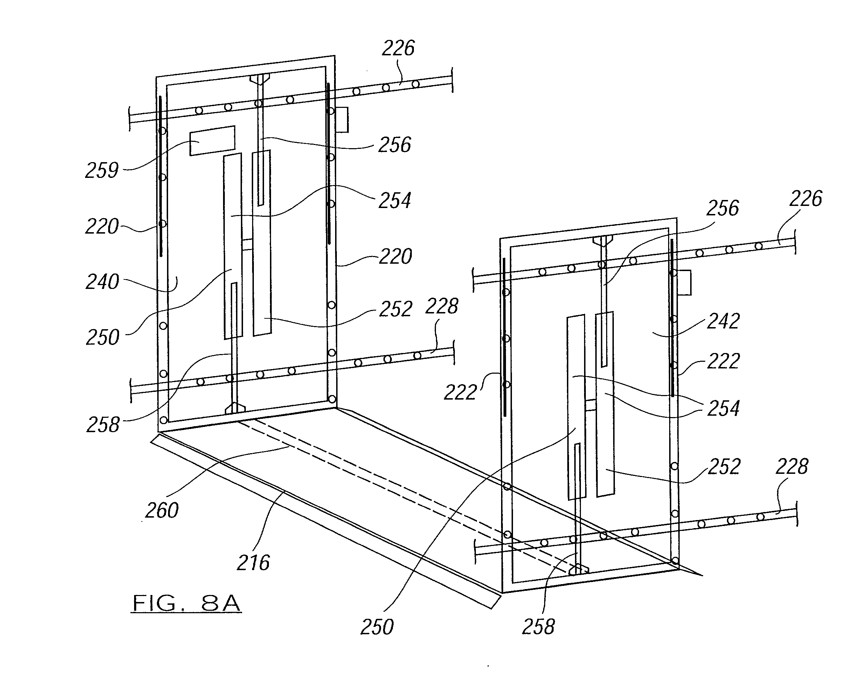

Figure 8A-C illustrate a more detailed description of the goods storage system according to the invention. The base 216 is shown mounted on a set of members 243 which in turn are movable along the first set of guide means 220, 222 as illustrated. In this case, the first set of guide means include housings 240, 242 in which the drive means for the base movement along the guide means is mounted. The first set of guide means are in turn mounted on the second set of guide means 226, 228 and movement along the same can be manually by pushing or, more preferably, by driven movement therealong.

Turning to the movement of the base along the first set of guide means 220, 222, this is achieved by the provision of sets of hydraulic rams 250, 252, one set in each housing 240, 242 adjacent the side wall of the storage area. The hydraulic rams in each set are mounted such that the bodies 254 of the same are mounted side by side. However the rams which extend from the bodies, extend in different directions, a first ram 256 extending upwardly and a second ram 258 extending downwardly as shown, and the movement is controlled as required to determine the selected height of the base 216 acted on by the rams 258, 256.

It is important for the sets of hydraulic rams to be synchronised in order to enable smooth movement of the base and therefore, advantageously, they are driven by a common power pack and hydraulic control 259 provided, in this case, in housing 240. Typically the control lines 260, between the sets of hydraulic rams pass through the base 216 as illustrated in Figure 8A. As no mechanical drive components are required to be provided in the base, the height of the base itself is significantly reduced with respect to the conventional goods storage system hence allowing improved movement of goods off and on to the same.

Figure 8A illustrates the base 216 at an intermediate height in the goods storage area when both the upwardly movable rams 256 and downwardly movable rams 258 are partially extended as shown.

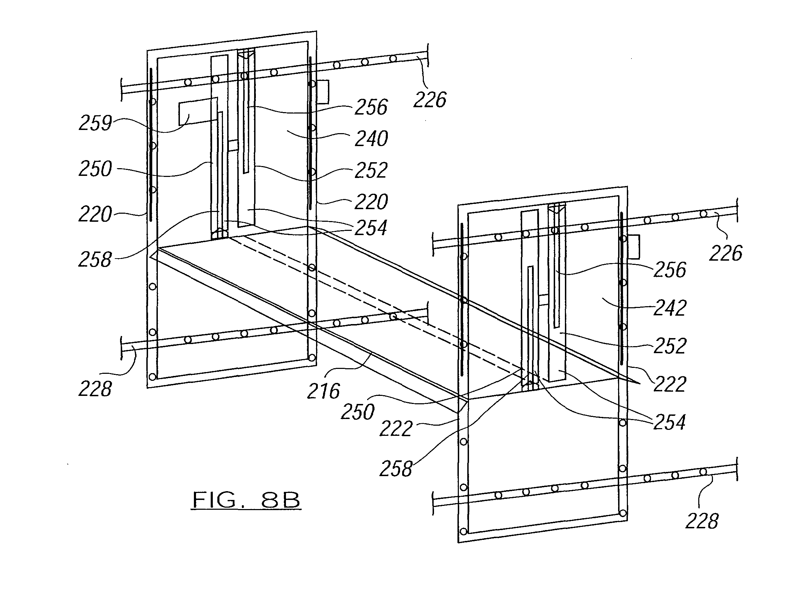

Figure 8B illustrates the base 16 in a raised position with both rams 256, 258 retracted within the ram bodies 254.

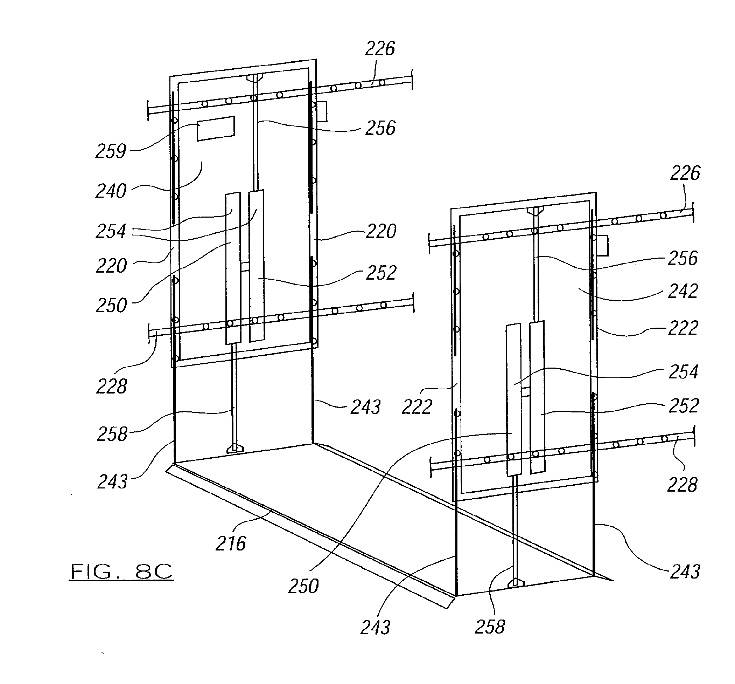

Figure 8C illustrates the base in a fully lowered position with the rams 256, 258 fully extended and the members 243, connected to the base 216, extending downwardly below the housings 240, 242. This downward extension allows the guide means lower ends to be at a height so as not to snag with the highest part of the goods storage area floor and so allows the first set of guide means and hence base to be moved along the entire length of the storage area regardless of the changes in floor height. The provision of the members 243 extension allows the base 216 to be moved down to the lowest part of the storage area floor thereby ensuring that all the floor area can be accessed. The members 243 can be of a length to suit particular storage area floor variations.

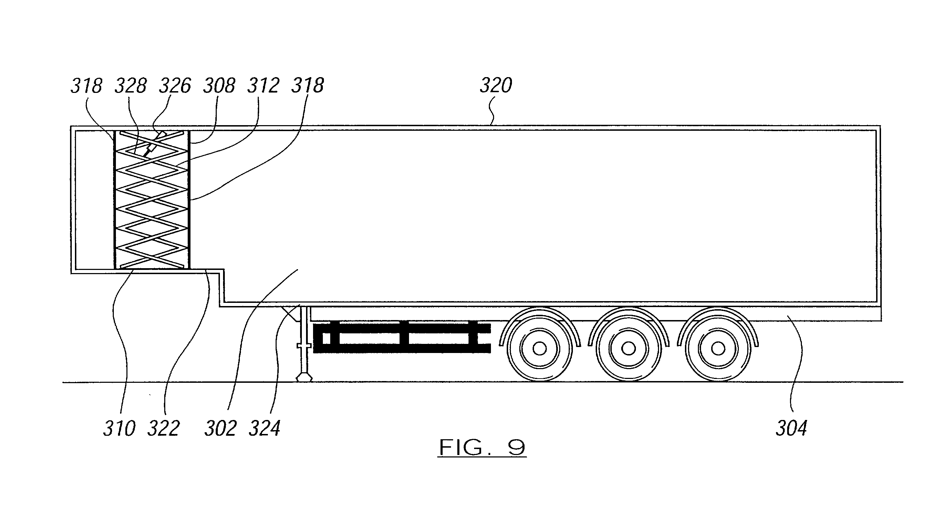

Referring firstly to Figure 9, there is illustrated a goods storage area 302 in the form of a vehicle trailer 304, with a side wall removed for illustration purposes, and the trailer is provided to be mountable with respect to a tractor unit, not shown, for transport.

The goods storage area is provided with a goods storage system 308 in an alternative embodiment to that of Figures 7 and 8A-C which comprises a base 310, movement means 312 in the form of a scissor arrangement, drive means 316 which acts on the scissor arrangement to extend and retract the same as required, vertical guide means 318 and horizontal guide means 320. In the embodiment shown in Figure 9, the goods system is provided with the base 310 located adjacent the stepped portion 322 of the goods storage area floor 324 so as to allow goods to be loaded and/or unloaded to and from the stepped portion floor. To get the base to that position, the scissor arrangements, one at each side of the base, are each acted upon by drive means in the form of hydraulic ram 326 which in turn is controlled by drive means, not shown, but provided either within the roof or side walls of the goods storage area. The extension of the hydraulic ram 326 acting on member 328 of the scissor arrangement serves to extend or retract the scissor arrangement so as to move the base 310 to the required position in the vertical plane. Movement of the guide means and base along the horizontal guide means 320 allows the base to be positioned in the required horizontal position within the goods storage area.

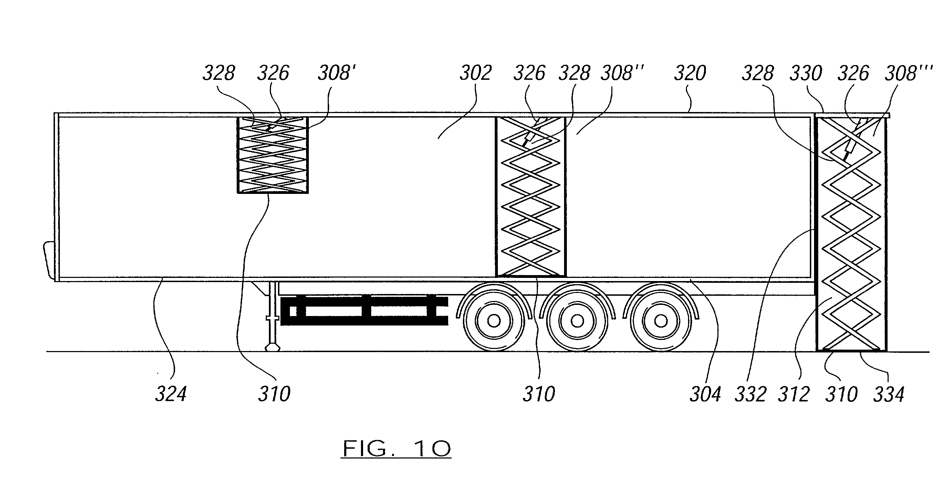

Figure 10 illustrates a goods storage area trailer with a flat floor 324 and, for illustrative purposes, shows three goods storage systems 308 positions, although it should be appreciated that any one trailer will typically only be provided with one such system. The three positions 308', 308", 308"' are shown to illustrate how the base can be located at various levels or heights within the goods storage area by the selected extension of the hydraulic ram 326 acting on the scissor arrangement 312 as illustrated by the change in height in positions 308' and 308".

The figure also shows the provision of another important feature of the invention whereby the horizontal guide means 20 are provided with extension members 330 which can extend outwardly from an open end 332 of the trailer as shown. When extended, the vertical guide means 318 can extend downwardly as the scissor arrangement 312 is extended and the base 310 moves to the position shown extended below the floor 324 of the goods storage area and hence extended to the level of the external surface 334 on which the trailer is mounted and to which level, goods can be required to be placed.

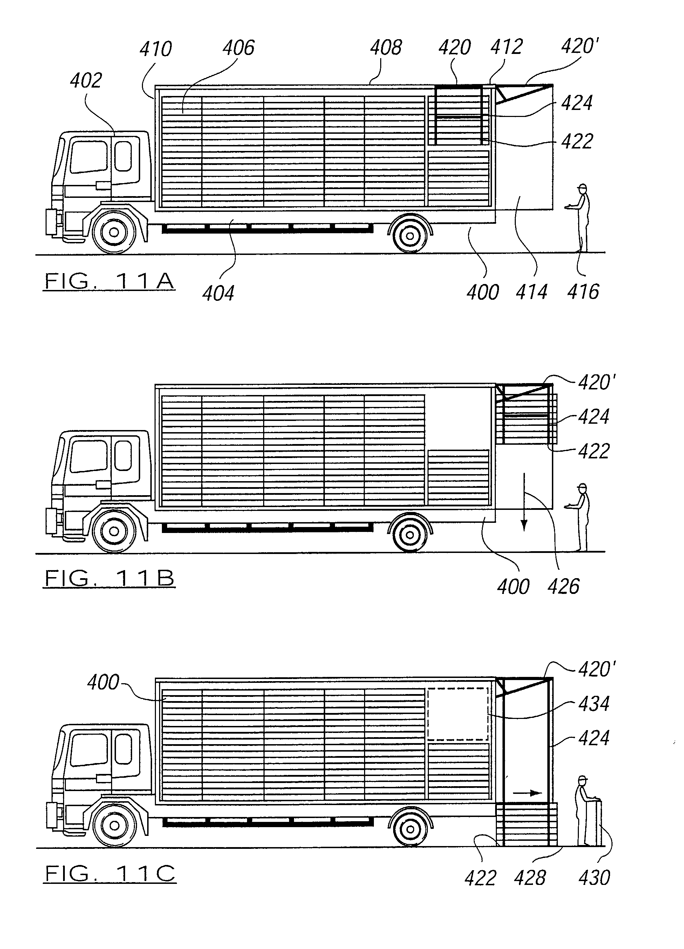

Figures 11a-e illustrate a further embodiment of the invention wherein there is again provided a goods storage area 400 mounted on a vehicle chassis 402 and provided with a floor 404, side walls 406, one of which is not shown for ease of reference, and which can be solid or curtain sided, roof 408, end wall 410 and openable end wall 412 which is shown in the open position with the doors 414 opened out. With the end wall 412 open the operator 416 can load and unload goods to and from the storage area. In the Figures it is illustrated how the goods handling means in this embodiment can be utilised to unload goods, with the steps shown followed in reverse to load the goods.

In Figure 11A the operator has opened the doors 414 to access the goods storage area and the guide means 420' extend outwardly as they are mounted on the doors, one of the doors is omitted for ease of reference.

With the guide means 420' extended, the base 422 and support means 424 move internally of the goods storage area from the position shown in Figure 11a to the position externally of the goods storage area shown in Figure 11b. The operator can then lower the base on the support means as shown by arrow 426 to the position shown in Figure 11c adjacent the ground 428. Thus the goods 430 mounted on the base 422 can then be removed by the operator as shown in Figure 11c.

An advantage of this embodiment of the goods handling means is to allow the portion of the goods storage means in which the goods defined by dotted line 434 to be used to store the goods 430 as they can be supported during transit on the base 422. This is in contrast to conventional transport which requires the portion 434 to be left unused due to the need to allow space to manually start unloading goods when the doors are first opened or to allow storage space for alternative goods handling systems. Thus the utilisation of the available space in any one trip is significantly increased.

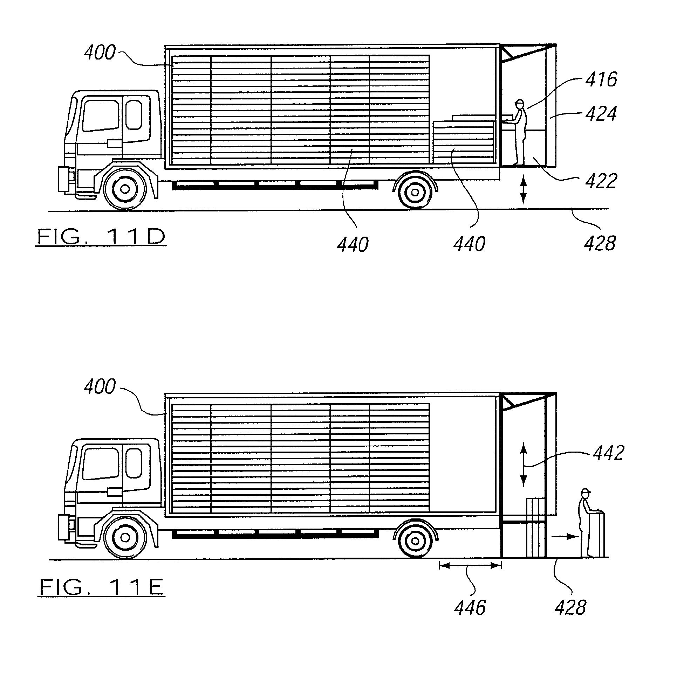

With the base and support means having had the goods 430 removed as shown in Figure 11d, the operator 416 can then stand on the base and use the same in the manner of a tail lift to allow the remaining goods 440 to be manually moved to the open end of the goods storage area, placed on the base 422 by the operator and the base then moved up and down by the operator to the ground 428 as indicated by arrow 442.

It will thus be appreciated that in this embodiment the base only moves along the portion 446 of the goods storage area and moves to the position externally of the goods storage area as shown. In this embodiment the base and support means need not move along the rest of the length of the goods storage area but of course this can be provided if required.

Thus, the present invention provides a goods storage area with a goods support system which not only allows improved and easier loading and unloading of goods to various locations and positions within the goods storage area by a person or persons, but, importantly, also allows said goods to be loaded onto and unloaded from the goods storage area from and to an external surface with the ability of the base of the goods support system to be moved to a position at or adjacent to the external surface which may be below the surface of the goods storage area.

## Claims

1. A goods handling system for a transportable goods storage area, said handling system comprising a set of guide means mounted on or adjacent to the side walls and/or roof of the goods storage area, along at least a portion of the length of the storage area, support means in connection with said set of guide means lying in a substantially vertical plane, said support means mounted for movement along the set of guide means and supporting a goods supporting base, said base movable in horizontal and vertical directions within at least the said portion of the goods storage area and wherein at least one of said set of guide means or support means are selectively positionable to allow the goods supporting base to extend beyond an open wall or end of the goods storage area to a location externally of the goods storage area and for movement in at least a substantially vertical plane.

2. A goods handling system according to claim 1 wherein at one end of each or some of the set of guide means there are stored extension members which, when the end of the goods storage area is open, can be moved to form an extension of the set of guide means and extend beyond the open end of the storage area.

3. A goods handling system according to claim 2 wherein the extension members are stored in position on doors which are provided at the openable end of the goods storage area such that, when said doors are moved to an open position, the extension members act to continue the guide means externally of the open end of the goods storage area.

4. A goods handling system according to claim 2 wherein said extension members are provided as part of the guide means and are telescopically extendable to extend beyond the open end of the storage area.

5. A goods handling system according to claim 1 wherein with the guide means in an extended position, the support means and base are movable along the same to a position at least partially external of the goods storage area.

6. A goods handling system according to claim 5 wherein the support means are extendable to a sufficient length to allow the base to be brought to a location on or adjacent an external surface which can be lower or higher than a floor of the goods storage area.

7. A goods handling system according to claim 6 wherein, with the base provided on an external surface, goods can be loaded onto and/or from said base.

8. A goods handling system according to claim 1 wherein the support means for the apparatus comprise a frame including a series of rollers or other engagement means which are formed to engage with the set of guide means.

9. A goods handling system according to claim 8 wherein, depending downwardly from the frame of the support means, are a series of columns on which the base is mounted.

10. A goods handling system according to any of the preceding claims wherein the base and/or support means are powered such that the base is provided for powered movement with respect to the support means and/or the support means with respect to the guide means.

11. A goods handling system according to claim 9 wherein the frame of the support means extends substantially across the width of the goods storage area.

12. A goods handling system according to claim 11 wherein the base extends substantially across the width of the goods storage area.

13. A goods handling system according to claim 1 wherein the set of guide means comprise two tracks, one mounted on each of the side walls of the goods storage area towards the top of said side walls of the storage area.

14. A goods handling system according to claim 13 wherein the tracks are mounted adjacent the roof of the goods storage area.

15. A goods handling system according to claim 13 wherein the tracks of the guide means include locations to allow the support means to be locked at selected positions on said tracks and/or drive means formations can be formed thereon to allow the support means to be driven along said guide means.

16. A goods handling system according to claim 1 wherein the set of guide means comprise three or more tracks mounted on or adjacent to the side walls of the storage area at spaced intervals along the goods storage area.

17. A goods handling system according to claim 16 wherein on each solid side wall, a first guide means is mounted at/or adjacent the top of the side wall and another is mounted at a lower location on the side wall and if the side wall is open or curtain sided, one guide means is provided at a location close to the top of the side walls.

18. A goods storage system according to claim 1 wherein the base support means are movable in a horizontal plane along said set of guide means substantially along the length of the storage area.

19. A goods storage system for a goods storage area defined by a floor, side walls and a roof, said system including a base for the selective placement of goods thereon, said base movable in a vertical direction within the goods storage area and a horizontal direction within at least a portion of the goods storage area, said base located on a plurality of members depending upwardly from said base, said members contactable with at least a first set of guide means to allow movement along the guide means in a vertical direction and wherein movement of the base in a vertical direction is achieved by the selective operation of at least one set of powered movement means, said movement means arranged such that a first movement means extends upwardly and a second movement means extends downwardly.

20. A goods storage system according to claim 19 wherein the movement means are hydraulic rams.

21. A goods storage system according to claim 19 wherein the bodies of the respective hydraulic rams in a set are mounted side by side in parallel.

22. A goods storage system according to claim 21 wherein the one or more sets of hydraulic rams are mounted adjacent a side wall of the goods storage area.

23. A goods storage system according to claim 22 wherein the rams, when fully extended, allow the base to be positioned adjacent to a portion of the floor of the storage area.

24. A goods storage system according to claim 23 wherein the guide means are provided with extension means members which allow the extension of the guide means and hence base attached thereto to allow the base to be moved to a location adjacent a further portion of floor which is at a lower level than the said first portion of the floor of the goods storage area.

25. A goods storage system according to claim 21 wherein the first set of guide means are mounted on a second set of guide means for horizontal movement therealong within the goods storage area.

26. A goods storage system according to claim 21 wherein a plurality of sets of hydraulic rams are provided in connection with the first set of guide means to drive the base between lowered and raised positions, and each of the sets of hydraulic rams are linked to be driven by a common control system to synchronise the movement of the same.

27. A goods storage system according to any of claims 21 to 26 wherein the base and first set of guide means can be moved along the second set of guide means to a position external of the goods storage area through an open end of the goods storage area and said base can be extended to a position adjacent an external surface, at a level below the floor level of the goods storage area.

28. A goods storage system for a goods storage area, said system comprising a base mounted with respect to a series of members which, in turn are mounted for movement along a set of vertical guide means wherein said base is movable to a position at the bottom end of said guide means and can then be lowered further by downward movement of the members with respect to the guide means such that the base is lowered to a position below the end of said guide means.

29. A goods storage system for a goods storage area defined by a floor, side walls and roof, said system including a base for the selected placement of goods thereon, said base movable in vertical and horizontal direction within the goods storage area, wherein said base is located with a plurality of members in a scissor arrangement, said arrangement extending downwardly from, or a location adjacent to, the roof of the goods storage area, the length of the extension controlled to determine the position of the base in the vertical plane.

30. A goods storage system according to claim 29 wherein the base is also connected to a plurality of guide members which extend, in a telescopic manner, in response to the extension of further members connected to the base.

31. A goods storage system according to claim 28 wherein the scissor arrangement is provided at two opposing sides of the base, each adjacent a side wall of the storage area and each of said scissor arrangements acted upon by drive means to determine the extent of extension means of the scissor arrangement.

32. A goods storage system according to claim 30 wherein the drive means is a hydraulic ram, each of scissor arrangements including a hydraulic ram acting upon its member to determine the extent of extension of the scissor arrangement.

33. A goods storage system according to claim 30, wherein the system includes horizontal guide means along which the vertical guide means and/or base can move to allow the positioning of the base in a horizontal plane within the goods storage area.

34. A goods storage system according to Claim 33 wherein the horizontal guide means each include extendable sections to allow the same to be extended beyond and through an open end of the goods storage area to allow the base and first set of guide means to be moved to a position external of the goods storage area.

35. A goods handling system for a goods storage area, said handling system comprising a set of guide means mounted on, or adjacent to the side walls, and/or roof of a goods storage area, said guide means provided along substantially the length of the storage area, a set of support means in connection with said set of guide means lying in a substantially vertical plane, said support means mounted for movement along the set of guide means and supporting a goods supporting base said base movable in horizontal and vertical directions within the confines defined by the goods storage area and **characterised in that** at least one of set of guide means or support means are selectively positionable to allow the goods supporting base to extend beyond an openable end of the goods storage area to a location external of the goods storage area.
